(19) Europäisches Patentamt
European Patent Office
Office européen des brevets

(11) **EP 2 923 182 B1**

(12) **EUROPÄISCHE PATENTSCHRIFT**

(45) Veröffentlichungstag und Bekanntmachung des Hinweises auf die Patenterteilung:
**30.11.2016 Patentblatt 2016/48**

(21) Anmeldenummer: **14783999.7**

(22) Anmeldetag: **25.09.2014**

(51) Int Cl.:
*G01F 1/58* (2006.01)    *G01F 1/60* (2006.01)

(86) Internationale Anmeldenummer:
**PCT/EP2014/002599**

(87) Internationale Veröffentlichungsnummer:
**WO 2015/043746 (02.04.2015 Gazette 2015/13)**

(54) **VERFAHREN ZUM BETREIBEN EINES MAGNETISCH-INDUKTIVEN DURCHFLUSSMESSGERÄTS**

METHOD FOR DRIVING A MAGNETO-INDUCTIVE FLOW METER

MÉTHODE POUR COMMANDER UN DÉBITMÈTRE MAGNÉTO-INDUCTIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.09.2013 DE 102013015899**

(43) Veröffentlichungstag der Anmeldung:
**30.09.2015 Patentblatt 2015/40**

(73) Patentinhaber: **KROHNE MESSTECHNIK GMBH & CO. KG**
**47058 Duisburg (DE)**

(72) Erfinder:
• **BILGIC, Attila**
**40880 Ratingen (DE)**

• **BROCKHAUS, Helmut**
**46145 Oberhausen (DE)**
• **NEVEN, Josef**
**F-26540 Mours St. Eusèbe (FR)**
• **SPIEGEL, Christoph**
**46049 Oberhausen (DE)**

(74) Vertreter: **Gesthuysen Patent- und Rechtsanwälte**
**Patentanwälte**
**Huyssenallee 100**
**45128 Essen (DE)**

(56) Entgegenhaltungen:
**EP-A1- 2 383 548    EP-A2- 1 275 940**
**US-A- 4 010 644**

**EP 2 923 182 B1**

## Beschreibung

Die Erfindung betrifft ein Verfahren zum Betreiben eines magnetisch-induktiven Durchflussmessgeräts zur Messung der Strömungsgeschwindigkeit eines strömenden Mediums. Das magnetisch-induktive Durchflussmessgerät weist eine Magnetfelderzeugungseinrichtung mit einer Elektromagnetanordnung und einer Permanentmagnetanordnung zur Erzeugung eines Magnetfelds mit unterschiedlich großen magnetischen Flussdichten im strömenden Medium auf. Darüber hinaus weist das magnetisch-induktive Durchflussmessgerät eine eine Messelektrodenanordnung umfassende Messeinrichtung zur Messung der von dem Magnetfeld in dem strömenden Medium induzierten und von einer Störspannung überlagerten Messspannung auf.

Magnetisch-induktive Durchflussmessgeräte sind seit Jahrzehnten umfangreich im Stand der Technik bekannt. Dazu wird exemplarisch auf die Literaturstelle "Technische Durchflussmessung" von Prof. Dr.-Ing. H. W. Bonfig, 3. Auflage, Vulkan-Verlag Essen, 2002, Seiten 123 bis 167, und auch auf die Literaturstelle "Grundlagen Magnetisch-Induktive Durchflussmessung" von Dipl.-Ing. Friedrich Hofmann, 3. Auflage, 2003, Druckschrift der Firma KROHNE Messtechnik GmbH & Co. KG, verwiesen.

Das grundlegende Prinzip magnetisch-induktiver Durchflussmessgeräte geht auf Michael Faraday zurück, der bereits im Jahr 1832 vorgeschlagen hat, das Prinzip der elektromagnetischen Induktion zur Messung der Strömungsgeschwindigkeit eines elektrisch leitfähigen Mediums anzuwenden. Nach dem faradayschen Induktionsgesetz entsteht in einem von einem Magnetfeld durchsetzten strömenden und elektrisch leitfähigen Medium ein elektrisches Feld senkrecht zur Strömungsrichtung des Mediums und auch senkrecht zum Magnetfeld.

Das faradaysche Induktionsgesetz wird bei magnetisch-induktiven Durchflussmessgeräten der eingangs beschriebenen Art dadurch ausgenutzt, dass die Magnetfelderzeugungseinrichtung ein Magnetfeld bereitstellt, welches das strömende Medium durchdringt. Die Elektromagnetanordnung weist mindestens einen Elektromagneten und die Permanentmagnetanordnung mindestens einen Permanentmagneten auf. Das das Medium durchdringende Magnetfeld wird vom bestromten Elektromagneten bzw. von den bestromten Elektromagneten und vom Permanentmagneten bzw. von den Permanentmagneten erzeugt, wobei sich die einzelnen Magnetfelder des bzw. der bestromten Elektromagnete und des bzw. der Permanentmagneten überlagern. Unterschiedlich große magnetische Flussdichten im strömenden Medium werden durch Speisung von wenigstens einem der Elektromagneten mit unterschiedlichen Strömen bewirkt. Die Ströme können sich dabei sowohl im Vorzeichen als auch im Betrag voneinander unterscheiden.

Das Magnetfeld im Medium weist zumindest eine zur Strömungsrichtung des Mediums senkrechte Komponente auf, wodurch sich im Medium ein elektrisches Feld senkrecht sowohl zu der Richtung des strömenden Mediums als auch zu der Richtung des Magnetfelds ausbildet. Die elektrische Feldstärke des elektrischen Feldes ist ein Maß für den Durchfluss des Mediums durch das magnetisch-induktive Durchflussmessgerät.

Die Messelektrodenanordnung weist mindestens zwei Messelektroden auf, die im galvanischen Kontakt mit dem durch das magnetisch-induktive Durchflussmessgerät strömenden Medium stehen. Die Anordnung von jeweils zwei der Messelektroden ist vorzugsweise gegenüberliegend auf einer gemeinsamen Achse parallel zur Richtung des elektrischen Feldes mit einem möglichst großen Abstand voneinander, wodurch die vom elektrischen Feld zwischen den Messelektroden bewirkte Messspannung maximal ist. Die Messspannung ist ein Maß für die elektrische Feldstärke und die Messeinrichtung ist zur Bestimmung des Durchflusses aus der Messspannung ausgebildet. Bekannt sind auch Messelektrodenanordnungen, bei denen die Messelektroden die Messspannung kapazitiv abgreifen.

Magnetisch-induktive Durchflussmessgeräte mit einer Elektromagnetanordnung und keiner Permanentmagnetanordnung zur Erzeugung des Magnetfelds werden zumeist mit Wechselmagnetfeldern im strömenden Medium betrieben. Ein Wechselmagnetfeld bewirkt eine Wechselmessspannung, wodurch zumindest teilweise eine Kompensation der Störspannung möglich ist. Voraussetzung für eine Kompensation der Störspannung ist, dass die zeitliche Änderung der Störspannung langsamer ist als die zeitliche Änderung des Wechselmagnetfelds. Im Übrigen trägt die elektrochemische Störspannung zur Störspannung bei.

Das Wechselmagnetfeld kann ein harmonisches Wechselmagnetfeld sein. Bei harmonischen Wechselmagnetfeldern ist die zeitliche Änderung der Magnetfeldstärke eine harmonische Schwingung. Ein harmonisches Wechselmagnetfeld kann durch Speisung der Elektromagnetanordnung aus einem vorhandenen Wechselspannungsnetz erzeugt werden. Das Betreiben von magnetisch-induktiven Durchflussmessgeräten mit einem harmonischen Wechselmagnetfeld hat wiederum Nachteile, wie der DE 199 07 864 A1 Spalte 1, Zeile 53, bis Spalte 2, Zeile 13, zu entnehmen ist.

In US 4 010 644 A ist ein Verfahren zum Betreiben eines magnetisch-induktiven Durchflussmessgeräts gemäß der Präambel des Anspruchs 1 offenbart.

Nachteile, die sich beim Betreiben eines magnetisch-induktiven Durchflussmessgeräts mit einem harmonischen Wechselmagnetfeld ergeben, können durch das Betreiben mit einem Wechselmagnetfeld vermieden werden, das ein geschaltetes Gleichmagnetfeld ist. Ein geschaltetes Gleichmagnetfeld besteht aus der sich periodisch wiederholenden Abfolge von mindestens zwei Intervallen, wobei in jedem der Intervalle das Magnetfeld nach einem Einschwingvorgang konstant ist und die Magnetfelder in zwei aufeinander folgenden Intervallen verschieden sind. Verschiedene Magnetfelder werden durch Bestromung von mindestens einem Elektromagneten mit verschiedenen Stromwerten erzeugt. Ein Stromwert ist dabei durch den Strombetrag und die Stromrichtung charakterisiert. So können sich die Magnetfelder durch unterschiedliche Magnetfeldstärken und/oder unterschiedliche Magnetfeldrichtungen unterscheiden. Zumeist besteht ein geschaltetes Gleichmagnetfeld aus zwei gleich langen Intervallen, und die Magnetfelder der Intervalle weisen eingeschwungen die betragsmäßig gleiche Magnetfeldstärke, aber entgegengesetzte Magnetfeldrichtungen auf.

Bei aus dem Stand der Technik bekannten magnetisch-induktiven Durchflussmessgeräten der eingangs beschriebenen Art wird die Elektromagnetanordnung nur zur Veränderung der magnetischen Remanenz der Permanentmagnetanordnung eingesetzt, wodurch die Leistungsaufnahme des magnetisch-induktiven Durchflussmessgeräts reduziert werden soll.

Der Energiebedarf der Elektromagnetanordnung zur Veränderung der magnetischen Remanenz der Permanentmagnetanordnung ist jedoch im Vergleich zur Erzeugung des das strömende Medium durchsetzenden Magnetfelds ausschließlich durch die Elektromagnetanordnung weitaus höher. Deshalb ist die Frequenz der Veränderung der magnetischen Remanenz der Permanentmagnetanordnung geringer als die Frequenz des Wechselmagnetfelds bei magnetisch-induktiven Durchflussmessgeräten nur mit einer Elektromagnetanordnung. Die geringere Frequenz der Veränderung der magnetischen Remanenz bedingt allerdings auch eine schlechtere Kompensation der Störspannung.

Aufgabe der vorliegenden Erfindung ist daher die Angabe eines Verfahrens zum Betreiben eines magnetisch-induktiven Durchflussmessgeräts der eingangs beschriebenen Art mit verbesserter Kompensation der Störspannung.

Die zuvor hergeleitete und aufgezeigte Aufgabe ist zunächst und im Wesentlichen dadurch gelöst, dass ein aus einem Kompensationsmessvorgang und einem Arbeitsmessvorgang bestehender Messzyklus ausgeführt wird, dass während des Kompensationsmessvorgangs mindestens ein erster Messvorgang, mindestens ein zweiter Messvorgang und mindestens ein dritter Messvorgang ausgeführt werden, dass während des ersten Messvorgangs eine erste magnetische Flussdichte $B_1$ im Medium erzeugt und eine erste Messspannung $U_{M,1}$ bestimmt wird, dass während des zweiten Messvorgangs eine zweite magnetische Flussdichte $B_2$ im Medium erzeugt und eine zweite Messspannung $U_{M,2}$ bestimmt wird und dass während des dritten Messvorgangs eine dritte magnetische Flussdichte $B_3$ im Medium erzeugt und eine dritte Messspannung $U_{M,3}$ bestimmt wird, dass aus der ersten magnetischen Flussdichte $B_1$, der zweiten magnetischen Flussdichte $B_2$, der ersten Messspannung $U_{M,1}$ und der zweiten Messspannung $U_{M,2}$ die Strömungsgeschwindigkeit

$$v_K = \frac{1}{k}\frac{U_{M,1} - U_{M,2}}{B_1 - B_2}$$

bestimmt wird, dass aus der dritten magnetischen Flussdichte $B_3$, der dritten Messspannung $U_{M,3}$ und der bestimmten Strömungsgeschwindigkeit $v$ die Störspannung $U_s = U_{M,3} - k\,B_3\,v_K$ bestimmt wird, dass nach dem Kompensationsmessvorgang der Arbeitsmessvorgang ausgeführt wird und der Arbeitsmessvorgang aus mindestens einem vierten Messvorgang besteht, dass während des vierten Messvorgangs die dritte magnetische Flussdichte $B_3$ im Medium erzeugt und eine vierte Messspannung $U_{M,4}$ bestimmt wird und dass aus der dritten magnetischen Flussdichte $B_3$, der vierten Messspannung $U_{M,4}$ und der bestimmten Störspannung $U_s$ die Strömungsgeschwindigkeit

$$v_4 = \frac{U_{M,4} - U_s}{k\,B_3}$$

neu bestimmt wird.

In den Gleichungen ist $k$ eine Konstante mit der Dimension $[k] = 1\ m$.

Im Vergleich zu dem aus dem Stand der Technik bekannten magnetisch-induktiven Durchflussmessgeräten der eingangs beschriebenen Art ist durch das erfindungsgemäße Verfahren zum Betreiben eines magnetisch-induktiven Durchflussmessgeräts die Kompensation der Störspannung verbessert und auch gleichzeitig die Leistungsaufnahme reduziert. Die Leistungsaufnahme ist auch reduziert im Vergleich zu dem aus dem Stand der Technik bekannten magnetisch-induktiven Durchflussmessgeräten mit nur einer Elektromagnetanordnung zur Erzeugung des Magnetfelds.

Der zeitliche Abstand von zwei Kompensationsmessvorgängen ist durch die Geschwindigkeit der zeitlichen Änderung der Störspannung und die Anforderung an die Genauigkeit der Bestimmung der Strömungsgeschwindigkeiten bestimmt. Übliche zeitliche Abstände von zwei aufeinander folgenden Kompensationsmessvorgängen sind kleiner oder gleich 20 msec. Veränderungen der Strömungsgeschwindigkeit des Mediums während des Kompensationsmessvorgangs beeinträchtigen die Bestimmung der Strömungsgeschwindigkeit, weshalb ein zeitlich kurzer Kompensationsmessvorgang vorteilhaft ist.

Die magnetische Remanenz eines Permanentmagneten kann verändert werden durch Beeinflussung der Magnetisierung des Permanentmagneten in einem externen Magnetfeld. Die zur Beeinflussung der Magnetisierung notwendige Energie wird dem externen Magnetfeld entnommen. Zur Reduktion der Leistungsaufnahme des magnetisch-induktiven Durchflussmessgeräts ist es daher vorteilhaft, wenn die magnetische Remanenz der Permanentmagnetanordnung durch das von der Elektromagnetanordnung erzeugte Magnetfeld nicht verändert wird. Um das zu erreichen, kann zum einen für die Permanentmagneten ein hartmagnetisches Material verwendet werden. Zum anderen kann das von der Elektromagnetanordnung erzeugte Magnetfeld so schwach gewählt werden, dass eine nur geringe Veränderung der magnetischen Remanenz der Permanentmagnetanordnung auftritt. Auch ist eine Kombination aus beiden Maßnahmen möglich.

Zur Verbesserung der Messgenauigkeit ist es vorteilhaft, wenn zur Bestimmung der Messspannung mindestens zwei Messungen der Messspannung durchgeführt werden. Durch das mindestens zweimalige Messen der Messspannung werden stochastische Fehler in der Messspannung vermindert.

Eine weitere Verbesserung der Messgenauigkeit ist möglich, wenn die ersten Messvorgänge und die zweiten Messvorgänge des Kompensationsmessvorgangs abwechselnd ausgeführt werden. Auf diese Weise können periodische Störungen der Messspannung vermindert werden.

In einer ganz besonders bevorzugten Ausgestaltung des erfindungsgemäßen Verfahrens wird die Elektromagnetanordnung während des ersten Messvorgangs mit einem ersten Strom und während des zweiten Messvorgangs mit einem zweiten Strom bestromt. Der Betrag des ersten Stroms ist gleich dem Betrag des zweiten Stroms und die Vorzeichen des ersten Stroms sind denen des zweiten Stroms entgegengesetzt. Das sich durch diese Bestromung der Elektromagnetanordnung ergebene Wechselmagnetfeld kann zum Beispiel ein harmonisches Wechselmagnetfeld oder auch ein geschaltetes Gleichmagnetfeld sein.

In einer weiteren ganz besonders bevorzugten Ausgestaltung des erfindungsgemäßen Verfahrens wird die dritte magnetische Flussdichte ausschließlich von der Permanentmagnetanordnung erzeugt und die Elektromagnetanordnung wird nicht bestromt. Demnach wird während des Arbeitsmessvorgangs keine Energie für die Erzeugung des das Medium durchdringenden Magnetfelds benötigt. Elektrische Energie zur Erzeugung eines Magnetfelds wird also nur noch während des Kompensationsmessvorgangs benötigt. Auf diese Weise wird die elektrische Leistungsaufnahme des magnetisch-induktiven Durchflussmessgeräts weiter reduziert.

In einer weiteren bevorzugten Ausgestaltung des erfindungsgemäßen Verfahrens ist vorgesehen, dass in einem ersten Schritt die Strömungsgeschwindigkeitsänderung über der Zeit aus jeweils aufeinander folgenden Strömungsgeschwindigkeiten des Mediums bestimmt wird. In einem zweiten Schritt wird die Strömungsgeschwindigkeitsänderung über der Zeit mit der typischen Störspannungsänderung über der Zeit verglichen. Die typische Störspannungsänderung kann auch eine empirisch bekannte Störspannungsänderung sein. In einem dritten Schritt wird, falls die Strömungsgeschwindigkeitsänderung über der Zeit größer ist als die typische Störspannungsänderung über der Zeit, ein neuer Messzyklus begonnen. Durch diese Modifizierung des erfindungsgemäßen Verfahrens ist es möglich, die zeitlichen Abstände zwischen zwei aufeinander folgenden Kompensationsmessvorgängen zu maximieren und somit die Leistungsaufnahme des magnetisch-induktiven Durchflussmessgeräts noch weiter zu reduzieren.

Schließlich kann das erfindungsgemäße Verfahren auch dadurch ausgestaltet werden, dass der Verlauf der Störspannung zwischen den einzelnen Kompensationsmessvorgängen geschätzt und der geschätzte zukünftige Verlauf der Störspannung für die Berechnung der Strömungsgeschwindigkeit herangezogen wird. Das zuvor angesprochene Schätzen kann mittels eines Interpolators erfolgen. Weiter kann es auch vorteilhaft sein, zusätzlich eine prädiktive Schätzung anzuwenden und den geschätzten zukünftigen Verlauf der Störspannung für die Berechnung der Strömungsgeschwindigkeit heranzuziehen. Das gibt dann auch die Möglichkeit, zusätzlich den prädiktiv geschätzten Verlauf der Störspannung während einer darauffolgenden Kompensationsmessung zu verifizieren und bei Überschreitung einer maximal tolerierbaren Abweichung in der Vergangenheit liegende Messwerte nachträglich zu korrigieren.

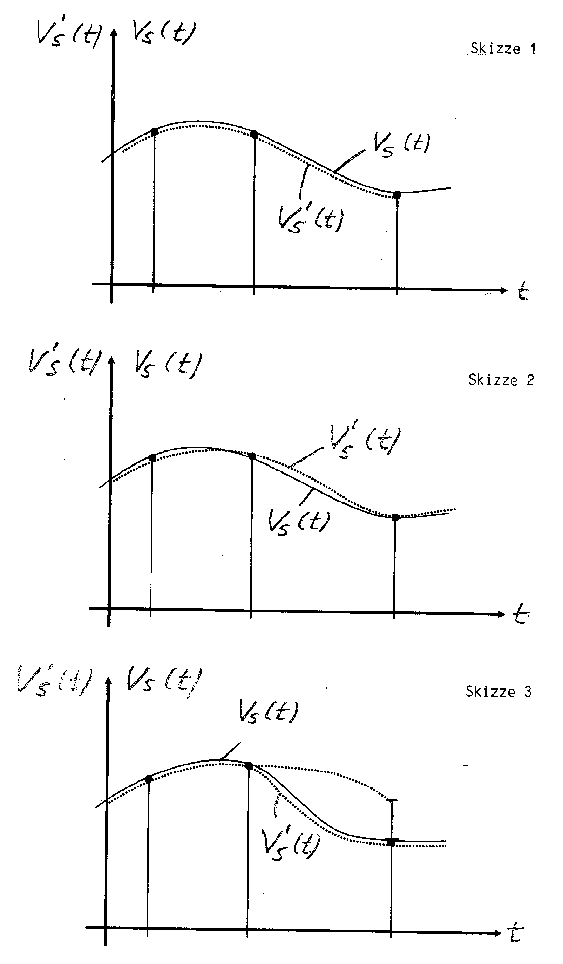

Zu dem, was im vorangegangenen Absatz ausgeführt ist, wird verwiesen auf die in der Zeichnung enthaltenen Skizzen.

Alle drei Skizzen zeigen den Verlauf der tatsächlichen Störspannung $V_s(t)$ und den Verlauf der geschätzten Störspannung $V'_s(t)$.

Die erste Skizze gilt für die bevorzugte Lehre, wonach der Verlauf der Störspannung zwischen den einzelnen Kompensationsmessvorgängen geschätzt wird und der geschätzte zukünftige Verlauf der Störspannung für die Berechnung der Strömungsgeschwindigkeit herangezogen wird.

Für die zweite Skizze gilt, dass zusätzlich eine prädiktive Schätzung zum Einsatz kommt und der geschätzte zukünftige Verlauf der Störspannung für die Berechnung der Strömungsgeschwindigkeit herangezogen wird.

Für die dritte Skizze gilt, dass zusätzlich der prädiktiv geschätzte Verlauf der Störspannung während darauffolgender Kompensationsmessungen verifiziert wird und bei Überschreitung einer maximal tolerierbaren Abweichung in der Vergangenheit liegende Messwerte nachträglich korrigiert werden.

In Verbindung mit der Lehre, zu der die erste Skizze gehört, ist darauf hinzuweisen, dass die Schätzung der Störspannung, z. B. mittels eines Interpolators, nur für die Vergangenheit erfolgen kann, d. h. zu einem Zeitpunkt $t_n$ können nur Messwerte berechnet werden, die bis zu dem Zeitpunkt $t_n$ aufgenommen worden sind. Bis zur nächsten Abtastung der Störspannung können zwar Messwerte aufgenommen, diese aber nicht kompensiert werden. Dies erfolgt nachträglich, sobald der nächste Abtastwert der Störspannung vorliegt.

Für die bevorzugte Lehre der Erfindung, zu der die zweite Skizze gehört, gilt, dass durch Extrapolation auch eine Schätzung für zukünftige Werte der Störspannung erfolgen kann. Einziger Unterschied in der zweiten Skizze zur ersten Skizze ist der, dass die Schätzung auch über den Zeitpunkt $t_{n+2}$ hinaus vorliegt, obwohl der Wert für den Zeitpunkt $t_{n+3}$ noch nicht aufgenommen worden ist. Damit ist es möglich, jede Messung sofort zu kompensieren und auszugeben.

In Verbindung mit der dritten Skizze ist darauf hinzuweisen, dass auch hier die Schätzung der Störspannung erfolgt, wobei die Schätzung für einen Zeitpunkt $t > t_{n+1}$ von der tatsächlichen Störspannung abweicht. Bei der nächsten Messung der Störspannung ergibt sich dadurch ein Fehler. Liegt dieser außerhalb einer für die jeweilige Applikation zu definierenden Schwelle, wird die Schätzung der Störspannung für die Vergangenheit korrigiert. Diese Ausgestaltung des erfindungsgemäßen Verfahrens kommt nur dann in Frage, wenn eine nachträgliche Korrektur der Messwerte möglich ist. Dies ist der Fall, wenn die kompensierten Messwerte zwar dargestellt, aber nicht an andere Systeme weitergegeben werden. Ein Beispiel wäre die Volumenmessung, also ganz konkret ein Wasserzähler.

**Patentansprüche**

1.  Verfahren zum Betreiben eines magnetisch-induktiven Durchflussmessgeräts zur Messung der Strömungsgeschwindigkeit eines strömenden Mediums, mit einer eine Elektromagnetanordnung aufweisenden Magnetfelderzeugungseinrichtung zur Erzeugung eines Magnetfelds mit unterschiedlich großen magnetischen Flussdichten im strömenden Medium und
    mit einer eine Messelektrodenanordnung umfassenden Messeinrichtung zur Messung der von dem Magnetfeld in dem strömenden Medium induzierten und von einer Störspannung ($V_s(t)$) überlagerten Messspannung,
    wobei ein aus einem Kompensationsmessvorgang und einem Arbeitsmessvorgang bestehender Messzyklus ausgeführt wird,
    wobei während des Kompensationsmessvorgangs mindestens ein erster Messvorgang, und mindestens ein zweiter Messvorgang ausgeführt werden,
    wobei während des ersten Messvorgangs eine erste magnetische Flussdichte im Medium erzeugt und eine erste Messspannung bestimmt wird,
    wobei während des zweiten Messvorgangs eine zweite magnetische Flussdichte im Medium erzeugt und eine zweite Messspannung bestimmt wird,
    wobei nach dem Kompensationsmessvorgang der Arbeitsmessvorgang ausgeführt wird,
    **dadurch gekennzeichnet,**
    **dass** die Magnetfelderzeugungseinrichtung eine Permanentmagnetanordnung beinhaltet,
    **dass** während des Kompensationsmessvorgangs mindestens ein dritter Messvorgang ausgeführt wird,
    **dass** während des dritten Messvorgangs eine dritte magnetische Flussdichte im Medium erzeugt und eine dritte Messspannung bestimmt wird, dass aus der ersten magnetischen Flussdichte, der zweiten magnetischen Flussdichte, der ersten Messspannung und der zweiten Messspannung die Strömungsgeschwindigkeit bestimmt wird, dass aus der dritten magnetischen Flussdichte, der dritten Messspannung und der bestimmten Strömungsgeschwindigkeit die Störspannung ($V_s(t)$) bestimmt wird, dass der Arbeitsmessvorgang aus mindestens einem vierten Messvorgang besteht, dass während des vierten Messvorgangs die dritte magnetische Flussdichte im Medium erzeugt und eine vierte Messspannung bestimmt wird und dass aus der dritten magnetischen Flussdichte, der vierten Messspannung und der bestimmten Störspannung ($V_s(t)$) die Strömungsgeschwindigkeit neu bestimmt wird.

2.  Verfahren nach Anspruch 1, **dadurch gekennzeichnet, dass** die magnetische Remanenz der Permanentmagnetanordnung durch das von der Elektromagnetanordnung erzeugte Magnetfeld nicht verändert wird.

3.  Verfahren nach Anspruch 1 oder 2, **dadurch gekennzeichnet, dass** zur Bestimmung der Messspannung mindestens zwei Messungen der Messspannung durchgeführt werden.

4.  Verfahren nach einem der Ansprüche 1 bis 3, **dadurch gekennzeichnet, dass** die ersten Messvorgänge und die zweiten Messvorgänge des Kompensationsmessvorgangs abwechselnd zur Verminderung von periodischen Störungen der Messspannung ausgeführt werden.

5.  Verfahren nach einem der Ansprüche 1 bis 4, **dadurch gekennzeichnet, dass** die Elektromagnetanordnung während des ersten Messvorgangs mit einem ersten Strom und während des zweiten Messvorgangs mit einem zweiten Strom bestromt wird und dass der Betrag des ersten Stroms gleich dem Betrag des zweiten Strom ist und die Vorzeichen des ersten Stroms und des zweiten Stroms entgegengesetzt sind.

6.  Verfahren nach einem der Ansprüche 1 bis 5, **dadurch gekennzeichnet, dass** die dritte magnetische Flussdichte ausschließlich von der Permanentmagnetanordnung erzeugt wird.

7.  Verfahren nach einem der Ansprüche 1 bis 6, **dadurch gekennzeichnet, dass** die Strömungsgeschwindigkeitsänderung über der Zeit aus jeweils zwei aufeinanderfolgenden Strömungsgeschwindigkeiten des Mediums bestimmt wird, die Strömungsgeschwindigkeitsänderung über der Zeit mit der typischen Störspannungsänderung über der Zeit verglichen wird und, falls die Strömungsgeschwindigkeitsänderung über der Zeit größer ist als die typische Störspannungsänderung über der Zeit, ein neuer Messzyklus begonnen wird.

8. Verfahren nach einem der Ansprüche 1 bis 7, **dadurch gekennzeichnet, dass** der Verlauf der Störspannung ($V_s(t)$) zwischen den einzelnen Kompensationsmessvorgängen geschätzt ($V'_s(t)$) wird, zum Beispiel mittels eines Interpolators, und der geschätzte zukünftige Verlauf der Störspannung ($V'_s(t)$) für die Berechnung der Strömungsgeschwindigkeit herangezogen wird.

9. Verfahren nach Anspruch 8, **dadurch gekennzeichnet, dass** zusätzlich eine prädiktive Schätzung zum Einsatz kommt.

10. Verfahren nach Anspruch 9, **dadurch gekennzeichnet, dass** zusätzlich der prädiktiv geschätzte Verlauf der Störspannung ($V'_s(t)$) während darauffolgender Kompensationsmessungen verifiziert wird und bei Überschreitung einer maximal tolerierbaren Abweichung in der Vergangenheit liegende Messwerte nachträglich korrigiert werden.

**Claims**

1. Method for operating a magnetic-inductive flowmeter for measuring the flow velocity of a flowing medium,
having a magnetic field generator with an electric magnet arrangement for generating a magnetic field with varyingly large magnetic flux densities in the flowing medium, and
having a measuring device comprising a measuring electrode arrangement for measuring the measuring voltage induced by the magnetic field in the flowing medium and superimposed by an interfering voltage ($V_s(t)$) wherein a measuring cycle consisting of a compensation measurement sequence and a work measurement sequence is carried out,
wherein at least one first measurement event and at least one second measurement event are carried out during the compensation measurement sequence,
wherein a first magnetic flux density is generated in the medium and a first measuring voltage is determined during the first measurement event, wherein a second magnetic flux density is generated in the medium and a second measuring voltage is determined during the second measurement event,
wherein the work measurement sequence is carried out after the compensation measurement sequence, **characterized in
that** the magnetic field generator contains a permanent magnet,

**that** at least a third measurement event is carried out during the compensation measurement sequence,
**that** a third magnetic flux density is generated in the medium and a third measuring voltage is determined during the third measurement event,
**that** the flow velocity is determined using the first magnetic flux density, the second magnetic flux density, the first measuring voltage and the second measuring voltage,
**that** the interfering voltage ($V_s(t)$) is determined using the third magnetic flux density, the third measuring voltage and the determined flow velocity,
**that** the work measurement sequence consists of at least a fourth measurement event,
**that** the third magnetic flux density is generated in the medium and a fourth measuring voltage is determined during the fourth measurement event, and
that the flow velocity is determined anew using the third magnetic flux density, the fourth measuring voltage and the determined interfering voltage ($V_s(t)$).

2. Method according to claim 1, **characterized in that** the magnetic remanence of the permanent magnet arrangement is not changed by the magnetic field generated by the electric magnet arrangement.

3. Method according to claim 1 or 2, **characterized in that** at least two measurements of the measuring voltage are carried out for determining the measuring voltage.

4. Method according to any one of claims 1 to 3, **characterized in that** the first measurement events and the second measurement events of the compensation measurement sequences are alternately carried out in order to reduce periodic interferences of the measurement voltage.

5. Method according to any one of claims 1 to 4, **characterized in that** the electric magnet arrangement is supplied with a first current during the first measurement event and with a second current during the second measurement event and that the absolute value of the first current is identical to the absolute value of the second current and the algebraic signs of the first current and the second current are opposites.

6. Method according to any one of claims 1 to 5, **characterized in that** the third magnetic flux density is generated solely by the permanent magnet arrangement.

7. Method according to any one of claims 1 to 6, **characterized in that** the change in flow velocity over time is determined using two successive flow velocities of the medium, the change in flow velocity over time is compared to the typical change in interfering voltage over time and, if the change in flow velocity over time is greater than the typical change in interfering voltage over time, a new measuring cycle is started.

8. Method according to any one of claims 1 to 7, **characterized in that** the course of the interfering voltage ($V_s(t)$) between the individual compensation measurement sequences is estimated ($V'_s(t)$), for example using an interpolator, and the estimated future course of the interfering voltage ($V'_s(t)$) is used for calculating the flow velocity.

9. Method according to claim 8, **characterized in that**, additionally, a predicative estimation is used.

10. Method according to claim 9, **characterized in that** the predicative estimated course of the interfering voltage ($V'_s(t)$) is additionally verified during ensuing compensation measurements and, in the case that a maximum tolerable deviation is exceeded, past measured values are retroactively corrected.

**Revendications**

1. Procédé de mise en fonctionnement d'un débitmètre magnéto-inductif pour mesurer le débit d'un milieu en écoulement,
comportant un dispositif générateur de champ magnétique présentant un système d'électroaimant destiné à générer un champ magnétique avec des densités de flux magnétiques de valeurs différentes dans le milieu en écoulement et
comportant un dispositif de mesure comprenant un système d'électrodes de mesure pour mesurer la tension de mesure induite par le champ magnétique dans le milieu en écoulement et à laquelle est superposée une tension parasite ($V_s(t)$),
dans lequel un cycle de mesure constitué d'un processus de compensation et d'un cycle de fonctionnement est exécuté,
dans lequel, pendant le processus de compensation, au moins un premier processus de mesure et au moins un deuxième processus de mesure sont exécutés,
dans lequel, pendant le premier processus de mesure, une première densité de flux magnétique est générée dans le milieu et une première tension de mesure est déterminée,
dans lequel, pendant le deuxième processus de mesure, une deuxième densité de flux magnétique est générée dans le milieu et un deuxième tension de mesure est déterminée,
dans lequel, après le processus de compensation, le cycle de fonctionnement est exécuté, **caractérisé en ce que** le dispositif générateur de champ magnétique comporte un système à aimant permanent,
**en ce que**, pendant le processus de compensation, au moins un troisième processus de mesure est exécuté,
**en ce que**, pendant le troisième processus de mesure, une troisième densité de flux magnétique est générée dans le milieu et une troisième tension de mesure est déterminée,
**en ce que** le débit est déterminé à partir de la première densité de flux magnétique, de la deuxième densité de flux magnétique, de la première tension de mesure et de la deuxième tension de mesure,
**en ce que** la tension parasite ($V_s(t)$) est déterminée à partir de la troisième densité de flux magnétique, de la troisième tension de mesure et du débit déterminé, **en ce que** le cycle de fonctionnement est constitué d'au moins un quatrième processus de mesure,
**en ce que**, pendant le quatrième processus de mesure, la troisième densité de flux magnétique est générée dans le milieu et une quatrième tension de mesure est déterminée et
**en ce que** le débit est de nouveau déterminé à partir de la troisième densité de flux magnétique, de la quatrième tension de mesure et de la tension parasite ($V_s(t)$) déterminée.

2. Procédé selon la revendication 1, **caractérisé en ce que** la rémanence magnétique du système à aimant permanent n'est pas modifiée par le champ magnétique généré par le système d'électroaimant.

3. Procédé selon la revendication 1 ou 2, **caractérisé en ce qu'**au moins deux mesures de la tension de mesure sont effectuées pour déterminer la tension de mesure.

4. Procédé selon l'une quelconque des revendications 1 à 3, **caractérisé en ce que** les premiers processus de mesure et les deuxièmes processus de mesure du processus de compensation sont exécutés de manière alternée pour réduire les perturbations périodiques de la tension de mesure.

5. Procédé selon l'une quelconque des revendications 1 à 4, **caractérisé en ce que** le système d'électroaimant est alimenté avec un premier courant pendant le premier processus de mesure et est alimenté avec un deuxième courant pendant le deuxième processus de mesure et **en ce que** la valeur du premier courant est égale à la valeur du deuxième courant et les signes du premier courant et du deuxième courant sont opposés.

6. Procédé selon l'une quelconque des revendications 1 à 5, **caractérisé en ce que** la troisième densité de flux magnétique est exclusivement générée par le système à aimant permanent.

**7.** Procédé selon l'une quelconque des revendications 1 à 6, **caractérisé en ce que** la variation du débit au cours du temps est déterminée à partir de deux débits successifs respectifs du milieu, **en ce que** la variation du débit au cours du temps est comparée à la variation typique de la tension parasite au cours du temps et **en ce que**, dans le cas où la variation du débit au cours du temps est supérieure à la variation typique de la tension parasite au cours du temps, un nouveau cycle de mesure est commencé.

**8.** Procédé selon l'une quelconque des revendications 1 à 7, **caractérisé en ce que** l'évolution de la tension parasite ($V_s(t)$) est estimée entre les processus de compensation ($V'_s(t)$) individuels, par exemple au moyen d'un interpolateur, et **en ce que** l'évolution future estimée de la tension parasite ($V'_s(t)$) est utilisée pour le calcul du débit.

**9.** Procédé selon la revendication 8, **caractérisé en ce qu'**une estimation prédictive est en outre mise en oeuvre.

**10.** Procédé selon la revendication 9, **caractérisé en ce que** l'évolution prédictive estimée de la tension parasite ($V'_s(t)$) est en outre vérifiée pendant les mesures de compensation effectuées ensuite et **en ce que**, lors du dépassement d'un écart maximal admissible, des valeurs de mesure se situant dans le passé sont corrigées rétrospectivement.

$V_s'(t) \quad V_s(t)$

Skizze 1

$V_s(t)$

$V_s'(t)$

$t$

$V_s'(t) \quad V_s(t)$

Skizze 2

$V_s'(t)$

$V_s(t)$

$t$

$V_s'(t) \quad V_s(t)$

Skizze 3

$V_s(t)$

$V_s'(t)$

$t$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19907864 A1

- US 4010644 A

**In der Beschreibung aufgeführte Nicht-Patentliteratur**

- **PROF. DR.-ING. H. W. BONFIG.** Technische Durchflussmessung. Vulkan-Verlag Essen, 2002, 123-167

- **DIPL.-ING. FRIEDRICH HOFMANN.** Grundlagen Magnetisch-Induktive Durchflussmessung. Druckschrift der Firma KROHNE Messtechnik GmbH & Co. KG, 2003